# EUROPEAN PATENT APPLICATION

(11) **EP 4 403 822 A1**
(43) Date of publication of application: **24.07.2024**
(21) Application number: 22869854.4
(22) Date of filing: 06.09.2022
(51) Int. Cl.: F21V 8/00, F21Y 115/10, F21Y 115/30, F21S 43/13, F21S 43/14, F21S 43/237, F21S 43/241, F21S 43/243, F21S 43/249, F21W 103/15, F21W 103/20, F21W 103/35, F21W 103/45, F21W 103/55

(54) **VEHICLE LAMP**

(30) Priority: 17.09.2021 JP 2021151725
(71) Applicant: Stanley Electric Co. Ltd., Tokyo 153-8636 (JP)
(72) Inventor: O Han, Tokyo 153-8636 (JP)
(74) Representative: Schmidbauer, Andreas Konrad
(86) International application number: PCT/JP2022/033422
(87) International publication number: WO 2023/042707

(57) **Abstract**

A vehicle lamp includes a plurality of light sources (2A, 2B) configured to emit light (L) in the same direction, and a light guide body (3) configured to guide the light (L), the light guide body (3) has a plurality of light guide portion (6A, 6B) that are disposed parallel to each other while extending in same direction with each other from positions facing the plurality of light sources (2A, 2B), respectively, and a light emitting portion (12) that is disposed on a front side of a light guide portion (6B) which is located on a foremost side of the plurality of light guide portions (6A, 6B), and lengths of the plurality of light guide portions (6A, 6B) sequentially increase from the light guide portion disposed at the rear side toward the light guide portion disposed at the front side of the light guide body (3) and the plurality of light guide portions (6A, 6B) a structure in which a slit portion (7) is provided between the light guide portion (6A) disposed at the rear side and the light guide portion (6B) disposed at the front side which are adjacent to each other, and in which a tip side of the light guide portion (6A) disposed at the rear side is connected to the light guide portion (6B) disposed at the front side via a connecting portion (8).

## Description

### [Technical Field]

The present invention relates to a vehicle lamp.

Priority is claimed on Japanese Patent Application No. 2021-151725, filed September 17, 2021, the content of which is incorporated herein by reference.

### [Background Art]

In the related art, as vehicle lamps installed in vehicles, a lamp obtained by combining a light source such as a light emitting diode (LED) or the like and a light guide such as an inner lens or the like is known (for example, see the following Patent Document 1). In such a vehicle lamp, due to diversification of designs, various forms have been developed.

For example, the following Patent Document 1 discloses a vehicle lamp that is a direction indicator (turn lamp) including a plurality of light sources configured to emit light in the same direction and a light guide configured to guide the light emitted from the plurality of light sources in the same direction, and configured to perform sequential emission of directing a flow of emission in a vehicle width direction in a light emitting surface of the light guide while sequentially turning on the plurality of light sources.

### [Citation List]

### [Patent Document]

[Patent Document 1]
Japanese Unexamined Patent Application, First Publication No. 2017-183287

### [Summary of Invention]

### [Technical Problem]

Incidentally, in the vehicle lamp that performs the above-mentioned sequential emission, in order to make it appear as if the light is flowing, a light emitting surface with a sufficient length in the direction of the light flow is required. In addition, a sufficient number of light sources are required for sequential emission.

An aspect of the present invention is directed to providing a vehicle lamp capable of increasing visibility by sequential emission even when a length of a light emitting surface is short and the number of light sources is small.

### [Solution to Problem]

In order to achieve the aforementioned objects, the present invention provides the following configurations.
(1) A vehicle lamp including:
   a plurality of light sources configured to emit light in same direction; and
   a light guide body configured to guide light emitted from the plurality of light sources,
   wherein the light guide body has:
      a plurality of light guide portions that are disposed parallel to each other while extending in same direction with each other from positions facing each of the plurality of light sources, respectively;
      a plurality of incidence parts that are disposed on base end sides of each of the plurality of light guide portions, and that are configured to cause light emitted from the light sources to enter therein;
      a plurality of first reflection parts that are disposed at sides opposite to the incidence parts of each of the plurality of light guide portions, respectively, and that are configured to reflect light guided toward the tip side of the light guide portions toward a front side of the light guide portions;
      a plurality of second reflection parts that are disposed on rear sides of each of the plurality of light guide portions, respectively, and that are configured to reflect light which has entered the rear side of the light guide portions toward the front side of the light guide portions; and
      a light emitting portion that is disposed on a front side of a light guide portion which is located on a foremost side of the plurality of light guide portions and that is configured to emit light reflected by the first reflection parts and the second reflection parts to outside, and
      lengths of the plurality of light guide portions sequentially increase from the light guide portion disposed at the rear side toward the light guide portion disposed at the front side of the light guide body and the plurality of light guide portions have a structure in which a slit portion is provided between the light guide portion disposed at the rear side and the light guide portion disposed at the front side which are adjacent to each other, and in which a tip side of the light guide portion disposed at the rear side is connected to the light guide portion disposed at the front side via a connecting portion.
(2) The vehicle lamp according to the above-mentioned (1), wherein the light emitting portion includes a first emission region configured to emit light by light reflected by the first reflection parts, and a second emission region configured to emit light by light reflected by the second reflection parts, and
   the first emission region emits light more strongly than the second emission region.
(3) The vehicle lamp according to the above-mentioned (2), wherein the light emitting portion has a light emitting surface in which the first emission region and the second emission region are arranged alternately in a vehicle width direction, and
   sequential emission of directing a flow of emission by the first emission region and the second emission region in the light emitting surface is performed while sequentially turning on the plurality of light sources.
(4) The vehicle lamp according to any one of the above-mentioned (1) to (3), wherein the first reflection parts include inclined surfaces inclined toward the front side of the light guide portions, and
   the second reflection parts include a plurality of reflection cuts arranged in a direction in which the light guide portions extend.
(5) The vehicle lamp according to the above-mentioned (4), wherein the plurality of reflection cuts are provided on back surfaces of the light guide portions at positions except portions facing the slit portion.
(6) The vehicle lamp according to the above-mentioned (5), wherein the plurality of reflection cuts are provided between the inclined surfaces adjacent to each other in the direction in which the light guide portions extend.

### [Advantageous Effects of Invention]

According to the aspect of the present invention, it is possible to provide a vehicle lamp capable of increasing visibility by sequential emission even when a length of a light emitting surface is short and the number of light sources is small.

### [Brief Description of Drawings]

FIG. 1 is a perspective view showing a configuration of a vehicle lamp according to a first embodiment of the present invention.
FIG. 2 is a front view showing the configuration of the vehicle lamp shown in FIG. 1.
FIG. 3 is a plan view showing the configuration of the vehicle lamp shown in FIG. 1.
FIG. 4 is a rear view showing the configuration of the vehicle lamp shown in FIG. 1.
FIG. 5 is a side view showing the configuration of the vehicle lamp shown in FIG. 1.
FIG. 6 is a cross-sectional view showing an optical path of light in the vehicle lamp shown in FIG. 1.
FIG. 7 is a perspective view showing a configuration of a lighting body provided in the vehicle lamp shown in FIG. 1.
FIG. 8 is a cross-sectional view showing a configuration of a vehicle lamp according to a second embodiment of the present invention.
FIG. 9 is a cross-sectional view showing a configuration of a vehicle lamp according to a third embodiment of the present invention.
FIG. 10 is a cross-sectional view showing a configuration of a vehicle lamp according to a fourth embodiment of the present invention.
FIG. 11 is a cross-sectional view showing a configuration of a vehicle lamp according to a fifth embodiment of the present invention.
FIG. 12 is a cross-sectional view showing a configuration of a vehicle lamp according to a sixth embodiment of the present invention.
FIG. 13 is a cross-sectional view showing a main part of a variant of the light source.

### [Description of Embodiments]

Hereinafter, embodiments of the present invention will be described in detail with reference to the accompanying drawings.

Further, in the drawings used in the following description, in order to make it easier to see each component, dimensions may be shown at different scales depending on the component, and a dimension ratio of each component may not be the same as it actually is.

In addition, in the drawings described below, an XYZ orthogonal coordinate system is set, with an X-axis direction indicating a forward/rearward direction (lengthwise direction) of a vehicle lamp, a Y-axis direction indicating a leftward/rightward direction (widthwise direction) of the vehicle lamp, and a Z-axis direction indicating an upward/downward direction (height direction) of the vehicle lamp.

### (First embodiment)

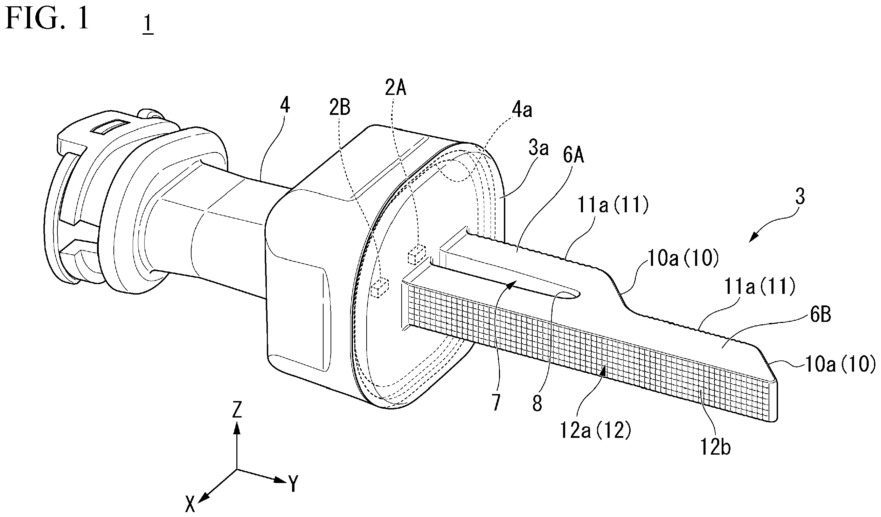

First, as a first embodiment of the present invention, for example, a vehicle lamp 1 shown in FIG. 1 to FIG. 7 will be described.

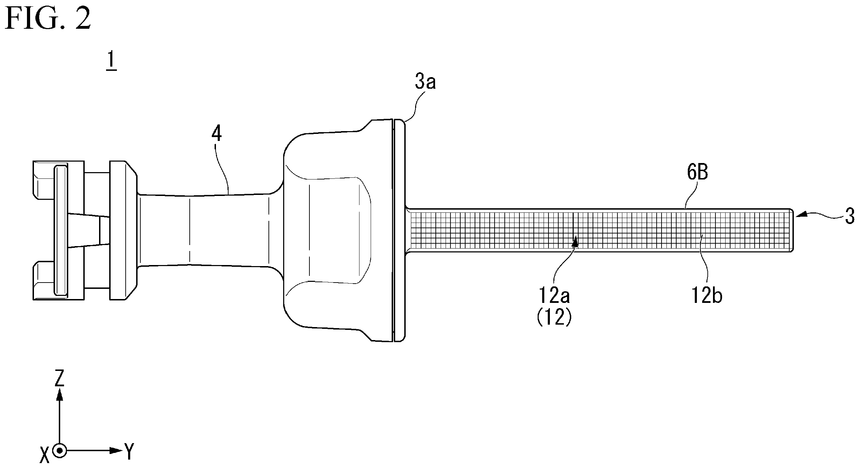

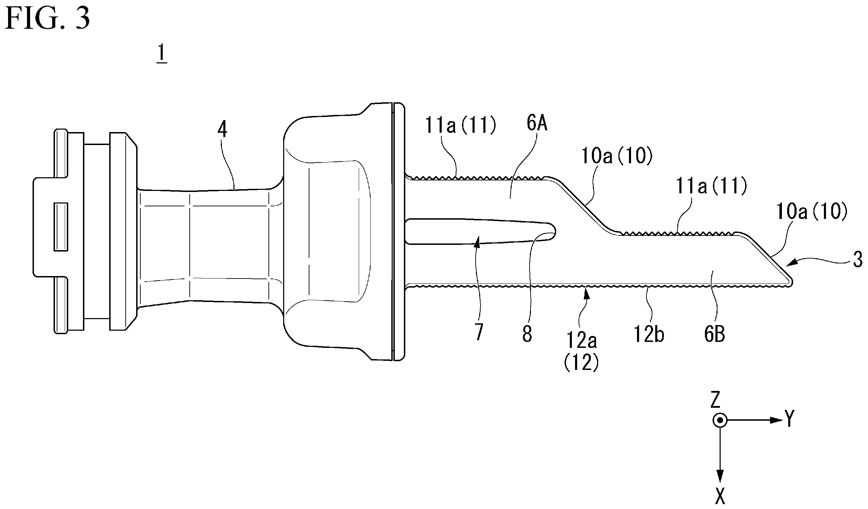

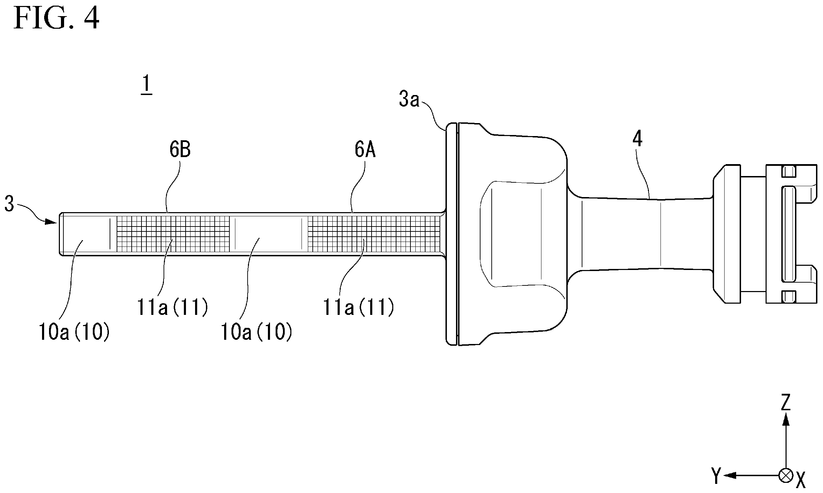

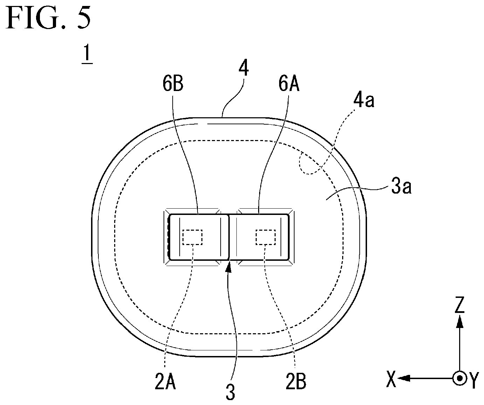

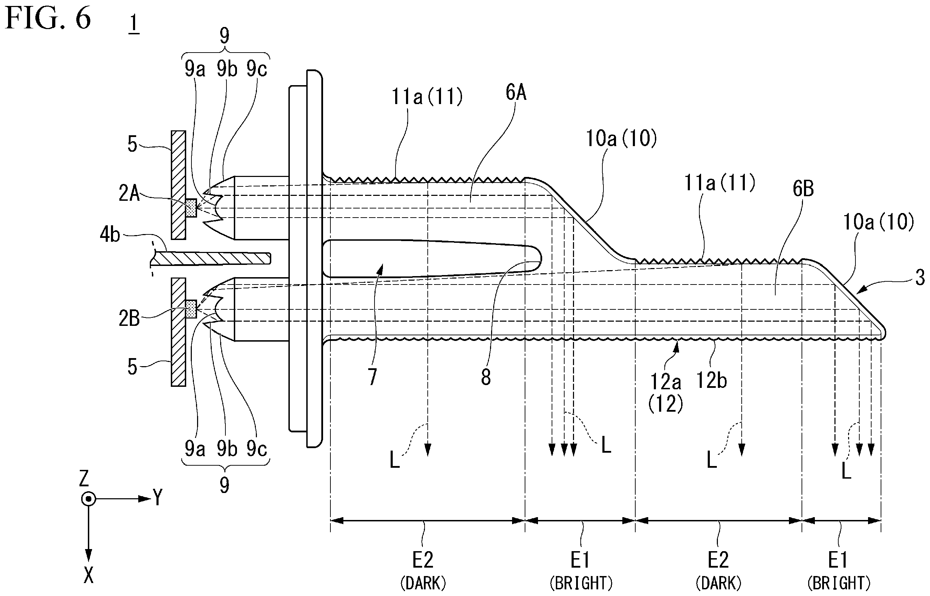

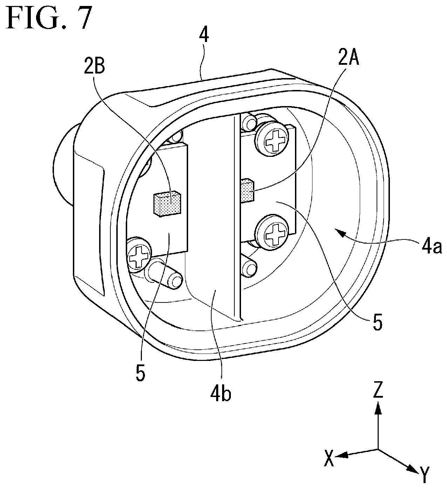

Further, FIG. 1 is a perspective view showing a configuration of the vehicle lamp 1. FIG. 2 is a front view showing a configuration of the vehicle lamp 1. FIG. 3 is a plan view showing a configuration of the vehicle lamp 1. FIG. 4 is a rear view showing a configuration of the vehicle lamp 1. FIG. 5 is a side view showing a configuration of the vehicle lamp 1. FIG. 6 is a cross-sectional view showing an optical path of light L in the vehicle lamp 1. FIG. 7 is a perspective view showing a configuration of a lighting body 4 provided in the vehicle lamp 1.

The vehicle lamp 1 of the embodiment is obtained by applying the present invention to direction indicators (turn lamps) disposed laterally symmetrically on a front side or a rear side of a saddle riding vehicle such as a motorcycle, an auto tricycle, or the like (hereinafter, simply referred to as "a vehicle").

Specifically, as shown in FIG. 1 to FIG. 7, the vehicle lamp 1 includes a plurality of (in the embodiment, two) light sources 2A and 2B configured to emit light L in the same direction, a light guide body 3 configured to guide the light L emitted from the plurality of light sources 2A and 2B, and the lighting body 4 configured to hold the plurality of light sources 2A and 2B and the light guide body 3.

The lighting body 4 constitutes a stay that is attached in a cantilevered manner in the vehicle width direction from the front side of the vehicle. The plurality of light sources 2A and 2B are disposed inside a housing part 4a provided on a tip side of the lighting body 4. The light guide body 3 has a cap part 3a configured to close the housing part 4a, and the cap part 3a is integrally attached to a periphery of the housing part 4a by welding or the like.

The plurality of light sources 2A and 2B are constituted by light emitting diodes (LEDs) configured to emit orange light (hereinafter, simply referred to as "light") L. The plurality of light sources 2A and 2B are arranged in a forward/rearward direction of the vehicle while each being mounted on one surface of a circuit board 5. The circuit board 5 is attached to the inside of the housing part 4a by screws or the like.

Accordingly, each of the light sources 2A and 2B radially emits the light L in a direction perpendicular to one surface of the circuit board 5 (vehicle width direction). That is, the plurality of light sources 2A and 2B are configured to radially emit the light L in the same direction.

In addition, a partition wall 4b configured to partition a space between one light source (hereinafter discriminated as "a first light source" according to necessity) 2A and another light source (hereinafter discriminated as "a second light source" according to necessity) 2B, which are adjacent to each other, is provided inside the housing part 4a.

Further, the plurality of light sources 2A and 2B are not necessarily limited to the configuration mounted on the separate circuit boards 5 as described above, but for example, the plurality of light sources 2A and 2B may be mounted on the same surface of the same circuit board 5.

In addition, the vehicle lamp 1 of the embodiment has a configuration in which a connector part (not shown) including a wiring electrically connected to the circuit board 5 is pulled out of a base end side of the lighting body 4 to the outside.

The light guide body 3 has a plurality of (in the embodiment, two) light guide portions 6A and 6B extending in the same directions from positions facing the plurality of light sources 2A and 2B, respectively. The light guide portions 6A and 6B have elongated shapes with widths in the forward/rearward direction that gradually increase from a base end side toward a tip side.

The plurality of light guide portions 6A and 6B are disposed while arranged parallel to each other in the forward/rearward direction of the light guide body 3 and have lengths that sequentially increase from a rear side toward a front side of the light guide body 3. That is, among the plurality of light guide portions 6A and 6B, a length of a light guide portion (hereinafter discriminated as "a second light guide portion" according to necessity) 6B in an extension direction, which is located on a front side, is greater than a length of a light guide portion (hereinafter discriminated as "a first light guide portion" according to necessity) 6A in an extension direction, which is located on a rear side. That is, among the plurality of light guide portions (in the example, the first light guide portion 6A and the second light guide portion 6B), a length of the light guide portion (in the example, the first light guide portion 6A) in the extension direction, which is located on the rear side, is smaller than the length of the light guide portion (in the example, the second light guide portion 6B) in the extension direction, which is provided at a position closer to the front side than the light guide portion (in the example, the first light guide portion 6A) which is located on the rear side.

The light guide body 3 has the first light guide portion 6A extending from a position facing the first light source 2A. The light guide body 3 has the second light guide portion 6B extending from a position facing the second light source 2B.

The first light guide portion 6A and the second light guide portion 6B extend in the same direction.

In addition, the light guide body 3 has a structure in which a slit portion 7 is provided between the first light guide portion 6A and the second light guide portion 6B which are adjacent to each other and a tip side of the first light guide portion 6A is connected to a midway part of the second light guide portion 6B via a connecting portion 8. Regarding the first light guide portion 6A and the second light guide portion 6B which are adjacent to each other, the light guide body 3 has a structure in which the connecting portion 8 connecting the tip side of the first light guide portion 6A and the midway part of the second light guide portion 6B is provided and in which the slit portion 7 is formed between the first light guide portion 6A, the second light guide portion 6B and the connecting portion 8.

The light guide body 3 has a plurality of (in the embodiment, two) incidence parts 9 disposed on base end sides of the plurality of light guide portions 6A and 6B, respectively, and configured to cause the light L emitted from the light sources 2A and 2B to enter therein. The light guide body 3 has a first incidence part 9 disposed on the base end side of the first light guide portion 6A and configured to cause the light L emitted from the first light source 2A to enter therein. The light guide body 3 has a second incidence part 9 disposed on the base end side of the second light guide portion 6B and configured to cause the light L emitted from the second light source 2B to enter therein.

Each of the incidence parts (the first incidence part and the second incidence part) 9 has a first focusing incident surface 9a that is disposed at a center of a portion facing each of the light sources 2A and 2B and that is configured to cause some of the light L emitted from the light sources 2A and 2B to enter therein, a second focusing incident surface 9b that is located on an inner circumferential side of a protrusion part protruding from a position surrounding the first focusing incident surface 9a toward the light sources 2A and 2B and that is configured to cause some of the light L emitted from the light sources 2A and 2B to enter therein, and a focusing reflecting surface 9c that is located on an outer circumferential side of the protrusion part and that is configured to reflect the light L entering from the second focusing incident surface 9b.

In the incidence parts 9, the light L entered from the first focusing incident surface 9a among the light L emitted from the light sources 2A and 2B is focused toward the optical axis of the light L emitted from the light sources 2A and 2B. Meanwhile, the light L entered from the second focusing incident surface 9b is focused toward the optical axis of the light L emitted from the light sources 2A and 2B by reflecting the light L entered from the second focusing incident surface 9b by the focusing reflecting surface 9c.

Accordingly, in the incidence parts 9, the light L radially emitted from the light sources 2A and 2B enters the light guide portions 6A and 6B while the light L radially emitted from the light sources 2A and 2B is parallelized and focused. In addition, the light L entered from the incidence parts 9 is guided toward the tip sides of the light guide portions 6A and 6B.

The light guide body 3 has a plurality of (in the embodiment, two) first reflection parts 10 that are disposed at opposite sides to the incidence parts 9 of the plurality of light guide portions 6A and 6B, respectively. Each of the first reflection parts 10 has an inclined surface 10a that is inclined at a predetermined angle (in the embodiment, 45° with respect to the optical axis of the light L) toward the front sides of the light guide portions 6A and 6B and that is disposed at the tip side of each of the light guide portions 6A and 6B.

Accordingly, in the first reflection parts 10, the light L entered the inclined surface 10a is reflected toward the front sides of the light guide portions 6A and 6B. Among these, the light L reflected by the inclined surface 10a provided on the tip side of the first light guide portion 6A enters the second light guide portion 6B from the rear side of the second light guide portion 6B via the connecting portion 8 and is guided toward the front side of the second light guide portion 6B. Meanwhile, the light L reflected by the inclined surface 10a provided on the tip side of the second light guide portion 6B is guided toward the front side of the second light guide portion 6B.

In addition, the light guide body 3 has a plurality of (in the embodiment, two) second reflection parts 11 disposed on the rear sides of the plurality of light guide portions 6A and 6B, respectively. Each of the second reflection parts 11 has a plurality of reflection cuts 11a arranged in a direction in which each of the light guide portions 6A and 6B extends (in the embodiment, in the vehicle width direction).

The plurality of reflection cuts 11a may be configured to reflect the light L that has entered the rear sides of the light guide portions 6A and 6B by an angle where the light is emitted (transmitted) to the outside from the front sides of the light guide portions 6A and 6B, and the shape, the size, the number, or the like, is not particularly limited thereto. In the embodiment, for example, the reflection cuts 11a, which have a substantially triangular cross section and which is obtained by cutting out the back surfaces of the light guide portions 6A and 6B in the upward/downward direction of the light guide body 3, are arranged next to each other in the extension direction of the light guide portions 6A and 6B.

Among the back surfaces of the light guide portions 6A and 6B, the plurality of reflection cuts 11a are provided at positions except a portion facing the slit portion 7. That is, among the back surface of the first light guide portion 6A, the plurality of reflection cuts 11a are provided across between the cap part 3a and the inclined surface 10a. In addition, among the back surface of the second light guide portion 6B, the plurality of reflection cuts 11a are provided across between the adjacent inclined surfaces 10a in a direction in which the second light guide portion 6B extends (vehicle width direction). Meanwhile, the front surface of the first light guide portion 6A and the back surface of the second light guide portion 6B, which face the slit portion 7, mutually form flat surfaces.

Accordingly, in the second reflection parts 11, the light L entering the plurality of reflection cuts 11a is reflected toward the front sides of the light guide portions 6A and 6B. Among these, the light L reflected by the plurality of reflection cuts 11a provided on the rear side of the first light guide portion 6A is emitted toward the outside from the front side of the first light guide portion 6A, passes through the slit portion 7, enters the second light guide portion 6B from the rear side of the second light guide portion 6B, and then, is guided to the front side of the second light guide portion 6B. Meanwhile, the light L reflected by the plurality of reflection cuts 11a provided on the rear side of the second light guide portion 6B is guided toward the front side of the second light guide portion 6B.

The light guide body 3 has a light emitting portion 12 that is disposed on the front side of the second light guide portion 6B located on the foremost side of the plurality of light guide portions 6A and 6B.

The light emitting portion 12 includes a first emission region E1 configured to emit light by the light L reflected by the inclined surface 10a (the first reflection parts 10) to the outside, and a second emission region E2 configured to emit light by the light L reflected by the plurality of reflection cuts 11a (the second reflection parts 11) to the outside, and a light emitting surface 12a in which the first emission region E1 and the second emission region E2 are alternately aligned in the extension direction (vehicle width direction) of the second light guide portion 6B.

In the light emitting portion 12, the light L emitted from the light emitting surfaces 12a toward the outside (in the embodiment, a side in front of the vehicle) causes the light emitting surfaces 12a to emit orange color.

Incidentally, in the vehicle lamp 1 of the embodiment, intensity of the light L reflected by the inclined surface 10a (the first reflection parts 10) is higher than intensity of the light reflected by the plurality of reflection cuts 11a (the second reflection parts 11). Accordingly, the first emission region E1 emits light more strongly than the second emission region E2. In addition, a width of the second emission region E2 is greater than that of the first emission region E1.

Accordingly, in the light emitting surfaces 12a, the first emission region E1 forms "a bright section" with a small width that relatively brightly emits light. Meanwhile, the second emission region E2 forms "a dark section" with a large width that relatively darkly emits light.

In addition, in the light emitting surfaces 12a, the second emission region E2 as "the dark section," the first emission region E1 as "the bright section," the second emission region E2 as "the dark section" and the first emission region E1 as "the bright section" are alternately disposed from the base end side toward the tip side in the vehicle width direction.

A plurality of diffusion cuts 12b configured to diffuse the light L emitted from the light emitting surfaces 12a toward the outside (a side in front of the vehicle) are provided on the light emitting portion 12. As the diffusion cuts 12b, for example, a lens cut referred to as a flute cut or a fisheye cut, a concavo-convex structure or the like formed by performing knurling, embossing, or the like, may be exemplified. In addition, by adjusting a shape or the like of the diffusion cut, a diffusion degree of the light L emitted from the light emitting surfaces 12a can be controlled. In the embodiment, as the diffusion cuts 12b, the fisheye cut configured to diffuse the light L emitted from the light emitting surfaces 12a in the upward/downward direction and the leftward/rightward direction of the vehicle is provided.

In the vehicle lamp 1 of the embodiment having the above-mentioned configuration, sequential emission of directing a flow of emission by the first emission region E1 and the second emission region E2 in the light emitting surfaces 12a is performed while sequentially turning on the plurality of light sources 2A and 2B.

Specifically, according to the following procedures (1) to (3), sequential emission as direction indicators (turn lamps) is performed by sequentially repeating turning-on and turning-off of the plurality of light sources 2A and 2B.

Among these, in the procedure (1), the first light source 2A and the second light source 2B are in a turned-off state. At this time, the light emitting surfaces 12a are in a non-emission state.

In the procedure (2), the first light source 2A is in a turned-on state, and the second light source 2B is in a turned-off state. At this time, the second emission region E2 as "the dark section" and the first emission region E1 as "the bright section" become an emission state from the base end side toward the tip side of the light emitting surfaces 12a.

In the procedure (3), the first light source 2A and the second light source 2B are in the turned-on state. At this time, the second emission region E2 as "the dark section," the first emission region E1 as "the bright section," the second emission region E2 as "the dark section" and the first emission region E1 as "the bright section" become the emission state from the base end side toward the tip side of the light emitting surfaces 12a.

Accordingly, in the vehicle lamp 1 of the embodiment, as the direction indicator (turn lamps), sequential emission of directing a flow of emission by the first emission region E1 and the second emission region E2 in the light emitting surfaces 12a can be performed.

Further, in the embodiment, while the case in which sequential emission is performed according to the above-mentioned procedures (1) to (3) has been exemplified, sequential emission may be performed according to inversed procedures of the procedures (1) to (3).

In addition, in the above-mentioned procedure (3), the first light source 2A may be in a turned-off state, and the second light source 2B is in a turned-on state. At this time, the second emission region E2 as "the dark section" and the first emission region E1 as "the bright section" becomes in the emission state while having the second emission region E2 and the first emission region E1 of "the non-emission state" being interposed between from the base end side toward the tip side of the light emitting surfaces 12a. Even in this case, it is possible to direct a flow of the emission by the first emission region E1 and the second emission region E2 in the light emitting surfaces 12a.

As described above, in the vehicle lamp 1 of the embodiment, it is possible to increase visibility through sequential emission by directing a flow of emission by the first emission region E1 (bright section) and the second emission region E2 (dark section) in the light emitting surfaces 12a while sequentially turning on the above mentioned plurality of light sources 2A and 2B even when the length of the light emitting surface 12a is small and the number of the light sources 2A and 2B is small.

### (Second embodiment)

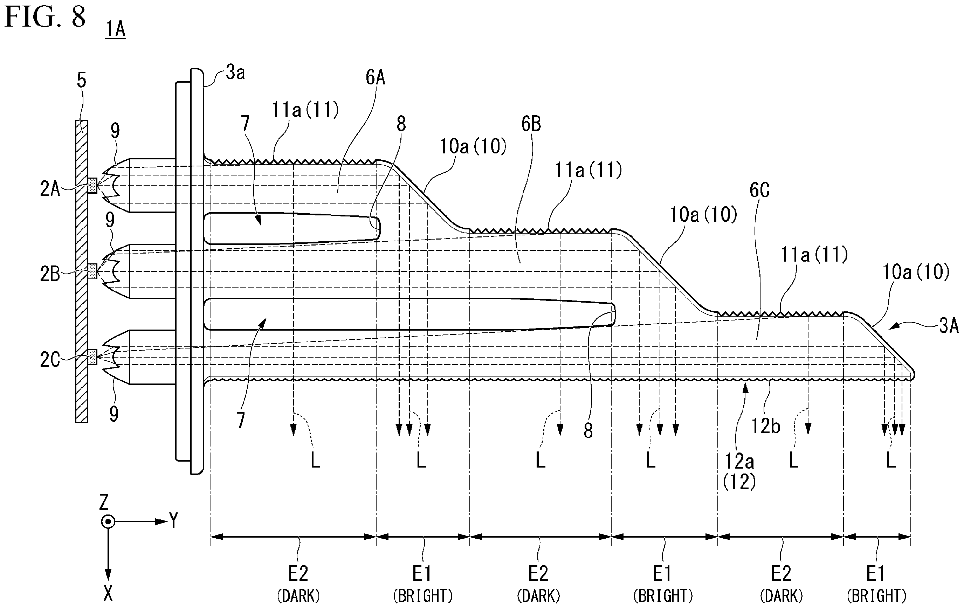

Next, as a second embodiment of the present invention, for example, a vehicle lamp 1A shown in FIG. 8 will be described.

Further, FIG. 8 is a cross-sectional view showing a configuration of the vehicle lamp 1A. In addition, in the following description, the same area as the vehicle lamp 1 will not be described, and the same reference signs in the drawings may be attached thereto.

As shown in FIG. 8, the vehicle lamp 1A of the embodiment includes three light sources 2A, 2B and 2C configured to emit the light L in the same direction, and a light guide body 3A including three light guide portions 6A, 6B and 6C configured to guide the light L emitted from the light sources 2A, 2B and 2C, respectively.

That is, the vehicle lamp 1A is configured by adding a third light source 2C adjacent to the second light source 2B and a third light guide portion 6C adjacent to the second light guide portion 6B to the configuration of the vehicle lamp 1.

In addition, the light guide body 3A has a configuration in which the slit portion 7 is provided between the second light guide portion 6B and the third light guide portion 6C adjacent to each other, and a tip side of the second light guide portion 6B is connected to a midway part of the third light guide portion 6C via the connecting portion 8.

Accordingly, in the light emitting surfaces 12a of the light guide body 3A, the second emission region E2 as "the dark section," the first emission region E1 as "the bright section," the second emission region E2 as "the dark section," the first emission region E1 as "the bright section," the second emission region E2 as "the dark section" and the first emission region E1 as "the bright section" are arranged alternately from the base end side toward the tip side in the vehicle width direction.

In the vehicle lamp 1A of the embodiment having the above-mentioned configuration, it is possible to perform sequential emission of directing a flow of emission by the first emission region E1 (bright section) and the second emission region E2 (dark section) in the light emitting surfaces 12a while sequentially turning on the plurality of the light sources 2A, 2B and 2C.

In addition, in the vehicle lamp 1A of the embodiment, it is possible to increase the number of the light sources 2A, 2B and 2C and the number of the light guide portions 6A, 6B and 6C corresponding thereto, extend the length of the light emitting surfaces 12a, increase the number of the first emission region E1 (bright section) and the second emission region E2 (dark section) in the light emitting surfaces 12a, and increase visibility by sequential emission.

### (Third embodiment)

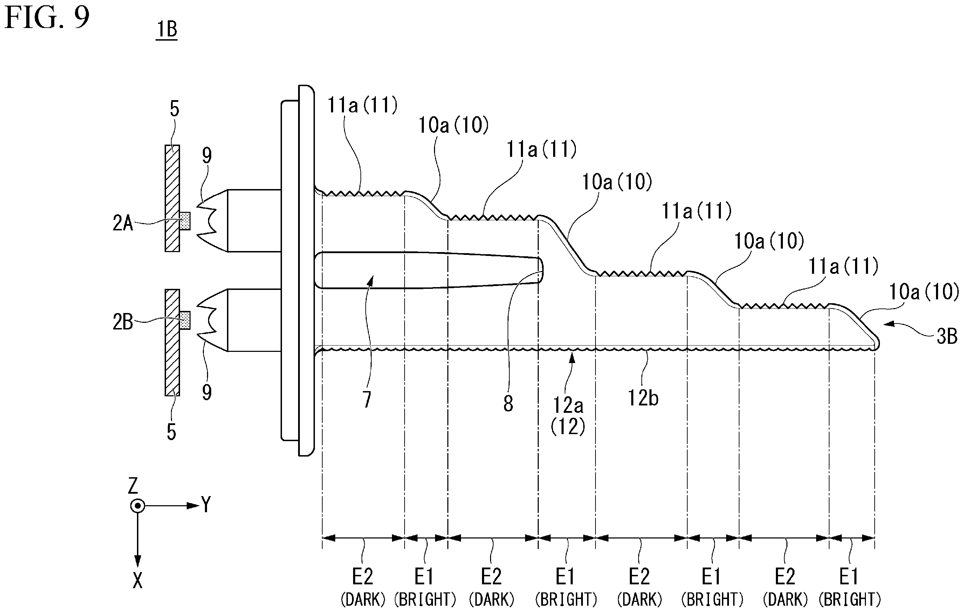

Next, as a third embodiment of the present invention, for example, a vehicle lamp 1B shown in FIG. 9 will be described.

Further, FIG. 9 is a cross-sectional view showing a configuration of the vehicle lamp 1B. In addition, in the following description, the same area as the vehicle lamp 1 will not be described, and the same reference signs in the drawings may be attached thereto.

As shown in FIG. 9, the vehicle lamp 1B of the embodiment has basically the same configuration as the vehicle lamp 1 except that the light guide body 3B configured differently from the first light guide portion 6A and the second light guide portion 6B of the vehicle lamp 1 is provided.

Specifically, in the light guide body 3B, each of the first light guide portion 6A and the second light guide portion 6B has the first reflection part 10 in which the plurality of (in the embodiment, two) inclined surfaces 10a are disposed, and the second reflection part 11 in which the plurality of (in the embodiment, two) reflection cuts 11a are disposed.

That is, stepped surfaces are provided at the rear side of the first light guide portion 6A and the second light guide portion 6B on both sides of the inclined surface 10a, and the plurality of reflection cuts 11a are arranged on each of the stepped surfaces in the extension direction of the light guide portions 6A and 6B. In addition, the inclined surfaces 10a are provided on the tip sides of the first light guide portion 6A and the second light guide portion 6B, respectively.

Accordingly, in the light emitting surfaces 12a of the light guide body 3B, the second emission region E2 as "the dark section," the first emission region E1 as "the bright section," the second emission region E2 as "the dark section," the first emission region E1 as "the bright section," the second emission region E2 as "the dark section," the first emission region E1 as "the bright section," the second emission region E2 as "the dark section" and the first emission region E1 as "the bright section" are arranged from the base end side toward the tip side in the vehicle width direction.

In the vehicle lamp 1B of the embodiment having the above-mentioned configuration, it is possible to perform sequential emission of directing a flow of emission by the first emission region E1 (bright section) and the second emission region E2 (dark section) in the light emitting surfaces 12a while sequentially turning on the plurality of light sources 2A and 2B.

In addition, in the vehicle lamp 1B of the embodiment, it is possible to increase visibility by sequential emission while increasing the number of the first emission region E1 and the second emission region E2 in the light emitting surfaces 12a without increasing the number of light sources 2A and 2B and the number of the light guide portions 6A and 6B corresponding thereto.

### (Fourth embodiment)

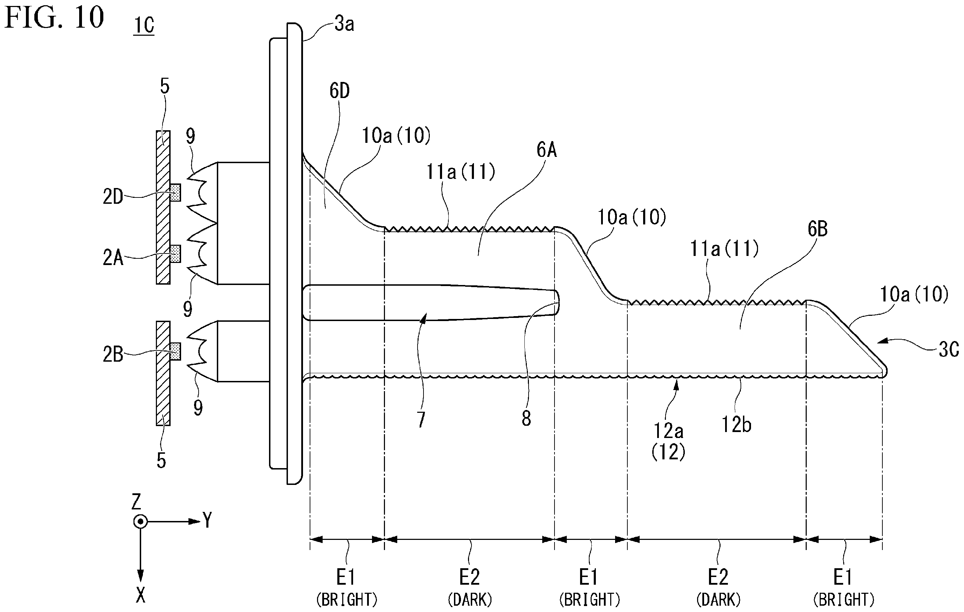

Next, as a second embodiment of the present invention, for example, a vehicle lamp 1C shown in FIG. 10 will be described.

Further, FIG. 10 is a cross-sectional view showing a configuration of the vehicle lamp 1C. In addition, in the following description, the same area as the vehicle lamp 1 will not be described, and the same reference signs in the drawings may be attached thereto.

As shown in FIG. 10, the vehicle lamp 1C of the embodiment includes three light sources 2D, 2A and 2B configured to emit the light L in the same direction, and a light guide body 3C including three light guide portions 6D, 6A and 6B configured to guide the light L emitted from the light sources 2D, 2A and 2B, respectively.

That is, the vehicle lamp 1A is configured by adding the third light source 2D adjacent to the first light source 2A and the third light guide portion 6D adjacent to the first light guide portion 6A to the configuration of the vehicle lamp 1.

In addition, the light guide body 3C has a configuration in which the third light guide portion 6D and the first light guide portion 6A adjacent to each other are formed integrally, and the inclined surface 10a is provided on the tip side of the third light guide portion 6D.

Accordingly, in the light emitting surfaces 12a of the light guide body 3C, the first emission region E1 as "the bright section," the second emission region E2 as "the dark section," the first emission region E1 as "the bright section," the second emission region E2 as "the dark section" and the first emission region E1 as "the bright section" are arranged alternately from the base end side toward the tip side in the vehicle width direction.

In the vehicle lamp 1C of the embodiment having the above-mentioned configuration, it is possible to perform sequential emission of directing a flow of emission by the first emission region E1 (bright section) and the second emission region E2 (dark section) in the light emitting surfaces 12a while sequentially turning on the plurality of light sources 2D, 2A and 2B.

In addition, in the vehicle lamp 1C of the embodiment, it is possible to increase the number of the first emission region E1 and the second emission region E2 in the light emitting surfaces 12a and increase visibility by sequential emission while increasing the number of the light sources 2D, 2A and 2B and the number of the light guide portions 6D, 6A and 6B without extending the length of the light emitting surfaces 12a.

### (Fifth embodiment)

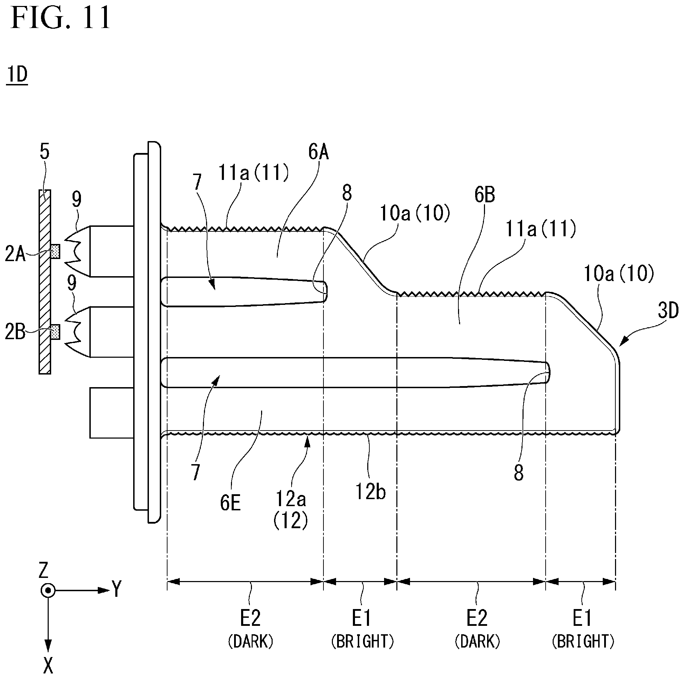

Next, as a fifth embodiment of the present invention, for example, a vehicle lamp 1D shown in FIG. 11 will be described.

Further, FIG. 11 is a cross-sectional view showing a configuration of the vehicle lamp 1D. In addition, in the following description, the same area as the vehicle lamp 1 will not be described, and the same reference signs in the drawings may be attached thereto.

As shown in FIG. 11, the vehicle lamp 1D of the embodiment includes a light guide body 3D including three light guide portions 6A, 6B and 6E.

That is, the vehicle lamp 1D is configured by adding a third light guide portion 6E adjacent to the second light guide portion 6B to the configuration of the above mentioned vehicle lamp 1.

The light guide body 3D has a structure in which the slit portion 7 is provided between the second light guide portion 6B and the third light guide portion 6E adjacent to each other, and the tip side of the second light guide portion 6B is connected to a tip portion of the third light guide portion 6E via the connecting portion 8.

In addition, the light guide body 3D has the light emitting portion 12 (the light emitting surfaces 12a) disposed on the front side of the third light guide portion 6E located on the foremost side of the plurality of light guide portions 6A, 6B and 6E.

Accordingly, in the light emitting surfaces 12a of the light guide body 3D, the second emission region E2 as "the dark section," the first emission region E1 as "the bright section," the second emission region E2 as "the dark section," the first emission region E1 as "the bright section," the second emission region E2 as "the dark section" and the first emission region E1 as "the bright section" are arranged alternately from the base end side toward the tip side in the vehicle width direction.

In the vehicle lamp 1D of the embodiment having the above-mentioned configuration, it is possible to perform sequential emission of directing a flow of emission by the first emission region E1 (bright section) and the second emission region E2 (dark section) in the light emitting surfaces 12a while sequentially turning on the plurality of light sources 2A and 2B.

In addition, in the vehicle lamp 1D of the embodiment, even when the length of the light emitting surface 12a is small and the number of the light sources 2A and 2B is small, it is possible to increase visibility by sequential emission.

### (Sixth embodiment)

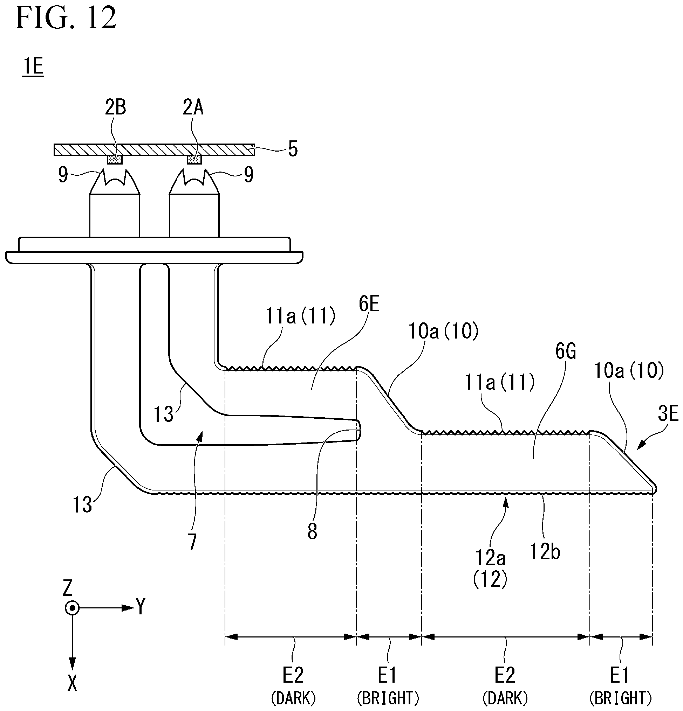

Next, as a sixth embodiment of the present invention, for example, a vehicle lamp 1E shown in FIG. 12 will be described.

Further, FIG. 12 is a cross-sectional view showing a configuration of the vehicle lamp 1E. In addition, in the following description, the same area as the vehicle lamp 1 will not be described, and the same reference signs in the drawings may be attached thereto.

As shown in FIG. 12, the vehicle lamp 1E of the embodiment includes a light guide body 3E including two light guide portions 6F and 6G.

The light guide body 3E has a configuration including the light guide portions 6F and 6G obtained by adding inclined surfaces 13 to the light guide portions 6A and 6B, respectively. The light guide body 3E has a shape curved in the light guide portions 6F and 6G at a predetermined angle (in the embodiment, 90°) by the inclined surface 13.

The inclined surface 13 is inclined at a predetermined angle (in the embodiment, 45° with respect to the optical axis of the light L) at front of the cap part 3a, and the light L guided toward the tip sides of the light guide portions 6F and 6G is reflected at the predetermined angle (in the embodiment, 90° with respect to the optical axis of the light L).

Accordingly, it is possible to change an optical path of the light L guided toward the tip sides of the light guide portions 6F and 6G. In addition, it is possible to change disposition of the light sources 2A and 2B.

In the vehicle lamp 1E of the embodiment having the above-mentioned configuration, it is possible to perform sequential emission of directing a flow of emission by the first emission region E1 (bright section) and the second emission region E2 (dark section) in the light emitting surfaces 12a while sequentially turning on the plurality of light sources 2A and 2B.

In addition, in the vehicle lamp 1E of the embodiment, even when the length of the light emitting surface 12a is small and the number of the light sources 2A and 2B is small, it is possible to increase visibility by sequential emission.

Further, the present invention is not particularly limited to the embodiment, and various modifications may be made without departing from the spirit of the present invention.

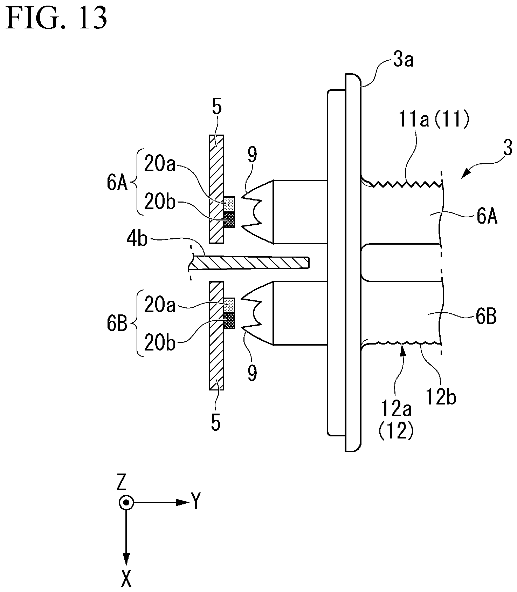

For example, as shown in FIG. 13, the vehicle lamp 1 may have a configuration in which each of the light sources 2A and 2B includes a plurality of (two in FIG. 13) emission elements 20a and 20b with different colored lights. In the configuration shown in FIG. 11, an LED configured to emit orange light as a first emission element 20a and an LED configured to emit red light as a second emission element 20b are used.

In the case of this configuration, it is possible to totally turning on the second emission elements 20b of the light sources 2A and 2B as tail lights (tail lamps) together with performing sequential emission while sequentially turning on the first emission elements 20a of the light sources 2A and 2B as the above-mentioned direction indicators (turn lamps).

Further, when an LED configured to emit white light as the second emission element 20b is used, it is also possible to totally turn on the second emission elements 20b of the light sources 2A and 2B as the position lamps.

Further, the vehicle lamp to which the present invention is applied is not limited to one mounted on the saddle riding vehicle described above, but may be mounted on a vehicle such as a four-wheeled vehicle. In addition, regarding the vehicle lamp to which the present invention is applied, although it is suitably used as the direction s (turn lamps) that perform the above-mentioned sequential emission, for example, the present invention can be widely applied to the vehicle lamp having light emitting surfaces such as width indicators (position lamps), daytime running lamps (DRLs), tail lights (tail lamp), brake lamps (stop lamps), back lamps, and the like.

In addition, regarding the light source, in addition to the above-mentioned LED, for example, an emission element such as a laser diode (LD) or the like can be used. In addition, the color of the light L emitted by the light source is not limited to the above-mentioned orange light, but can be changed as appropriate, such as red light or white light, depending on the use of the vehicle lamp.

### [Reference Signs List]

1, 1A to 1E...vehicle lamp 2A to 2D...light source 3, 3A to 3E...light guide body 4...lighting body 5...circuit board 6A to 6G...light guide portion 7...slit portion 8...connecting portion 9...incidence part 10...first reflection part 10a...inclined surface 11...second reflection part 11a...plurality of reflection cut 12...light emitting portion 12a...light emitting surface 13...inclined surface E1...first emission region (bright section) E2...second emission region (dark section) L...light

## Claims

1. A vehicle lamp comprising:
a plurality of light sources configured to emit light in same direction; and
a light guide body configured to guide light emitted from the plurality of light sources,
wherein the light guide body has:
a plurality of light guide portions that are disposed parallel to each other while extending in same direction with each other from positions facing each of the plurality of light sources, respectively;
a plurality of incidence parts that are disposed on base end sides of each of the plurality of light guide portions, and that are configured to cause light emitted from the light sources to enter therein;
a plurality of first reflection parts that are disposed at sides opposite to the incidence parts of each of the plurality of light guide portions, respectively, and that are configured to reflect light guided toward the tip side of the light guide portions toward a front side of the light guide portions;
a plurality of second reflection parts that are disposed on rear sides of each of the plurality of light guide portions, respectively, and that are configured to reflect light which has entered the rear side of the light guide portions toward the front side of the light guide portions; and
a light emitting portion that is disposed on a front side of a light guide portion which is located on a foremost side of the plurality of light guide portions and that is configured to emit light reflected by the first reflection parts and the second reflection parts to outside, and
lengths of the plurality of light guide portions sequentially increase from the light guide portion disposed at the rear side toward the light guide portion disposed at the front side of the light guide body and the plurality of light guide portions have a structure in which a slit portion is provided between the light guide portion disposed at the rear side and the light guide portion disposed at the front side which are adjacent to each other, and in which a tip side of the light guide portion disposed at the rear side is connected to the light guide portion disposed at the front side via a connecting portion.

2. The vehicle lamp according to claim 1, wherein the light emitting portion includes a first emission region configured to emit light by light reflected by the first reflection parts, and a second emission region configured to emit light by light reflected by the second reflection parts, and
the first emission region emits light more strongly than the second emission region.

3. The vehicle lamp according to claim 2, wherein the light emitting portion has a light emitting surface in which the first emission region and the second emission region are arranged alternately in a vehicle width direction, and
sequential emission of directing a flow of emission by the first emission region and the second emission region in the light emitting surface is performed while sequentially turning on the plurality of light sources.

4. The vehicle lamp according to any one of claims 1 to 3, wherein the first reflection parts include inclined surfaces inclined toward the front side of the light guide portions, and
the second reflection parts include a plurality of reflection cuts arranged in a direction in which the light guide portions extend.

5. The vehicle lamp according to claim 4, wherein the plurality of reflection cuts are provided on back surfaces of the light guide portions at positions except portions facing the slit portion.

6. The vehicle lamp according to claim 5, wherein the plurality of reflection cuts are provided between the inclined surfaces adjacent to each other in the direction in which the light guide portions extend.
